# EUROPEAN PATENT APPLICATION

(11) **EP 4 794 338 A1**
(43) Date of publication of application: **19.08.2026**
(21) Application number: 24876519.0
(22) Date of filing: 08.10.2024
(51) Int. Cl.: H04N 21/2187

(54) **LIVE-STREAMING INTERACTION METHOD AND APPARATUS, DEVICE, AND STORAGE MEDIUM**

(30) Priority: 13.10.2023 CN 202311333142
(71) Applicant: Beijing Zitiao Network Technology Co., Ltd., Beijing 100190 (CN)
(72) Inventor: FAN, Teng, Beijing 100028 (CN)
(74) Representative: Grünecker Patent- und Rechtsanwälte PartG mbB
(86) International application number: PCT/CN2024/123494
(87) International publication number: WO 2025/077705

(57) **Abstract**

Embodiments of the disclosure relate to a method, apparatus, device and storage medium for live streaming interaction. The method proposed herein includes: presenting, during a target interaction event associated with a plurality of live streams, a set of interactive resources for the target interaction event in a live streaming interface of a first live stream among the plurality of live streams, the live streaming interface corresponding to a target user of the first live stream, the set of interactive resources being obtained based on at least one historical interaction operation of the target user during the target interaction event and/or at least one historical interaction operation of the target user during a historical interaction event associated with the first live stream; and applying, based on a selection of a target interactive resource from the set of interactive resources, a target policy corresponding to the target interactive resource to the target interaction event. In this way, the embodiments of the disclosure can improve the participation degree of the user for the live streaming interaction event.

## Description

This application claims the benefit of Chinese Patent Application No. 202311333142.5, filed on October 13, 2023, entitled "METHOD, APPARATUS, DEVICE AND STORAGE MEDIUM FOR LIVE STREAMING INTERACTION", the entire content of which is incorporated herein by reference.

### FIELD

Example embodiments of the present disclosure generally relate to the field of computers, and in particular, to a method, apparatus, device, and computer-readable storage medium for live streaming interaction.

### BACKGROUND

With the development of computer technologies, the Internet has become an important source for people to obtain various contents. With the rapid development of the live streaming technologies for content dissemination by using the Internet and the streaming media technology, people may perform various types of interaction through a live stream, and information with rich types may be obtained through a live stream.

### SUMMARY

In a first aspect of the present disclosure, a method of live streaming interaction is provided. The method includes: presenting, during a target interaction event associated with a plurality of live streams, a set of interactive resources for the target interaction event in a live streaming interface of a first live stream among the plurality of live streams, the live streaming interface corresponding to a target user of the first live stream, the set of interactive resources being obtained based on at least one historical interaction operation of the target user during the target interaction event and/or at least one historical interaction operation of the target user during a historical interaction event associated with the first live stream; and applying, based on a selection of a target interactive resource from the set of interactive resources, a target policy corresponding to the target interactive resource to the target interaction event.

In a second aspect of the present disclosure, an apparatus for live streaming interaction is provided. The apparatus includes: a presenting module configured to present, during a target interaction event associated with a plurality of live streams, a set of interactive resources for the target interaction event in a live streaming interface of a first live stream among the plurality of live streams, the live streaming interface corresponding to a target user of the first live stream, the set of interactive resources being obtained based on at least one historical interaction operation of the target user during the target interaction event and/or at least one historical interaction operation of the target user during a historical interaction event associated with the first live stream; and an applicating module configured to apply, based on a selection of a target interactive resource from the set of interactive resources, a target policy corresponding to the target interactive resource to the target interaction event.

In a third aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the electronic device to perform the method of the first aspect.

In a fourth aspect of the present disclosure, a computer-readable storage medium is provided. The computer-readable storage medium has a computer program stored thereon, the computer program being executable by a processor to implement the method of the first aspect.

It should be understood that the content described in this content section is not intended to limit the key or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIGS. 2A to 2D illustrate example interfaces according to some embodiments of the present disclosure;
FIGS. 3A and 3B illustrate example interfaces according to some embodiments of the present disclosure;
FIGS. 4A and 4B illustrate example interfaces according to some embodiments of the present disclosure;
FIG. 5 illustrates a flowchart of an example live streaming interaction process according to some embodiments of the present disclosure;
FIG. 6 illustrates a schematic structural block diagram of an apparatus for live streaming interaction according to some embodiments of the present disclosure; and
FIG. 7 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein. Rather, these embodiments are provided for a more thorough and complete understanding of the present disclosure. It should be understood that the drawings and embodiments of the present disclosure are for example purposes only and are not intended to limit the scope of the present disclosure.

It should be noted that the title of any section/subsection provided herein is not limiting. Various embodiments are described throughout, and any type of embodiments may be included in any section/subsection. Furthermore, the embodiments described in any section/subsection may be combined in any manner with the same section/subsection and/or any other embodiment described in different sections/subsections.

In the description of the embodiments of the present disclosure, the term "including" and the like should be understood to include "including but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

The embodiments of the present disclosure may involve data of a user, obtaining of the data and/or using of the data, and the like. These aspects all follow the corresponding laws and regulations and related regulations. In the embodiments of the present disclosure, all data is collected, obtained, processed, handled, forwarded, used, etc., all of which are performed on the premise the knowledge and confirmation of the user. Accordingly, in a case where implementing the embodiments of the present disclosure, the types of the data or information that may be involved, the usage scope, the usage scenario, and the like should be notified to the user and obtain the authorization of the user in an appropriate manner according to the relevant laws and regulations. The specific notification and/or authorization manner may vary according to actual situations and application scenarios, and the scope of the present disclosure is not limited in this respect.

According to the solutions in the present specification and the embodiments, for example, personal information processing is involved, processing may be performed on the premise of having a legality basis (for example, obtaining consent of a personal information subject, or necessary for performing a fulfillment contract), and processing only within a specified or agreed range. The user rejects personal information other than necessary information required by the basic function, and does not affect the basic function of the user.

As introduced above, live streaming has become an important form of Internet interaction. People may, for example, initiate a live streaming and become a streamer of the live stream. Alternatively, people may also join a further live stream to obtain corresponding live streaming content.

In some scenarios, a plurality of live streams may be involved in a live streaming interaction event, for example, live streaming competition interaction (also referred to as live streaming PK), or live streaming collaboration interaction. In such an interaction event, the live stream may accumulate corresponding interaction information (for example, an interaction value), and such interaction information may be updated based on an interaction operation of a user on the live stream. For example, when the user performs an interaction with virtual gifts, the corresponding live stream may accumulate corresponding interaction values.

However, for users (e.g., viewers) in a live stream, the manners of participating in the interaction events between the live streams are monotonous, which greatly affects the user's experience in participating in the live streaming interaction event.

In view of this, embodiments of the present disclosure provide a live streaming interaction solution. According to the solution, a set of interactive resources for the target interaction event are presented, during a target interaction event associated with a plurality of live streams, in a live streaming interface of a first live stream among the plurality of live streams. The live streaming interface corresponds to a target user of the first live stream. The set of interactive resources is obtained based on at least one historical interaction operation of the target user during the target interaction event and/or at least one historical interaction operation of the target user during a historical interaction event associated with the first live stream. Further, a target policy corresponding to the target interactive resource to the target interaction event is applied based on a selection of a target interactive resource from the set of interactive resources.

Based on the above manner, the user can obtain an interactive resource for the live streaming interaction event through a specific interaction operation, and apply such interactive resource to the live streaming interaction event, thereby improving the participation degree of the user for the live streaming interaction event.

Various example implementations of this scheme are described in detail below in conjunction with the accompanying drawings.

### Example Environment

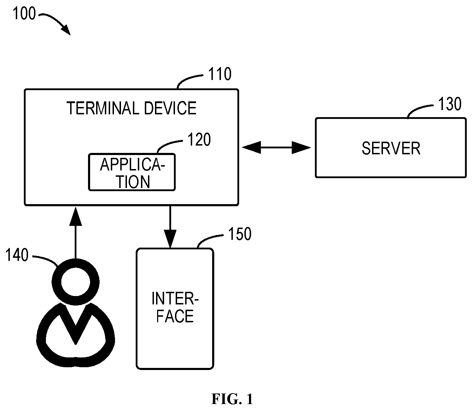

FIG. 1 illustrates a schematic diagram of an example environment 100 in which embodiments of the present disclosure can be implemented. As shown in FIG. 1, the example environment 100 may include a terminal device 110.

In this example environment 100, the terminal device 110 may run an application 120 for providing, viewing media content. The application 120 may be any suitable type of application for providing, viewing media content, examples of which may include, but are not limited to, online video applications, live streaming applications, and so on. The user 140 may interact with the application 120 via the terminal device 110 and/or its attachment device. The user 140 may, for example, be a user providing live streaming content (also referred to as a streamer) or a user viewing the live streaming (also referred to as a viewer).

In the environment 100 of FIG. 1, if the application 120 is active, the terminal device 110 may present a live streaming interface 150 through the application 120.

In some embodiments, the terminal device 110 communicates with a server 130 to enable provisioning of services to the application 120. the terminal device 110 may be any type of mobile terminal, fixed terminal, or portable terminal, including but not limited to a mobile phone, a desktop computer, a laptop computer, a notebook computer, a netbook computer, a tablet computer, a media computer, a multimedia tablet computer, a palmtop computer, a portable gaming terminal, a VR/AR device, a Personal Communication System (PCS) device, a personal navigation device, a Personal Digital Assistant (PDA), an audio/video player, a digital camera/camcorder, a positioning device, a television receiver, a radio broadcast receiver, an e-book reader, a gaming device, or any combination of the foregoing, including accessories and peripherals thereof or any combination thereof. In some embodiments, the terminal device 110 can also support any type of interface for a user (such as a "wearable" circuit, etc. ).

The server 130 may be an independent physical server, or a server cluster or distributed system constituted by a plurality of physical servers, or a cloud server providing basic cloud-computing services such as cloud services, cloud databases, cloud computing, cloud functions, cloud storage, network services, cloud communications, middleware services, domain-name services, security services, content-delivery networks, big-data platforms, and AI platforms. The server 130 may include, for example, a computing system/server, such as a mainframe, an edge computing node, a computing device in a cloud environment, or the like. The server 130 may provide a background service for the application 120 that supports the virtual scene in the terminal device 110.

A communication connection may be established between the server 130 and the terminal device 110. The communication connection may be established in a wired manner or a wireless manner. The communication connection may include, but is not limited to, a Bluetooth connection, a mobile network connection, a Universal Serial Bus (USB) connection, a Wireless Fidelity (Wi-Fi) connection, and the like, and the embodiments of the present disclosure are not limited in this aspect. In embodiments of the present disclosure, the server 130 and the terminal device 110 may implement signaling interaction by using a communication connection between the server 130 and the terminal device 110.

It should be understood that the structures and functions of the various elements in the environment 100 are described for example purposes only and do not imply any limitation to the scope of the present disclosure.

Some example embodiments of the present disclosure will be described below with continued reference to the accompanying drawings.

### Example Interaction Event

The terminal device 110 may provide a live streaming interface of a live stream for the user 140. For example, the terminal device 110 may provide the live streaming interface of the first live stream for the user 140 based on the first live stream selected by the user 140. The user 140 may obtain, through the live streaming interface, live streaming content provided by a streamer related to the first live stream.

Further, the streamer of the first live stream may establish and implement interaction of "cross-live stream" by, for example, inviting a streamer of a further live stream (for example, a second live stream). For example, in a case where the streamer establishes the interaction across the live stream with a further streamer, the live streaming content of the first live stream and the live streaming content of the second live stream may be presented in the live streaming interface viewed by the user 140 at the same time. In such a state, the streamer and the viewer in the first live stream may interact with the streamer and the viewer in the second live stream to enrich the interactive experience.

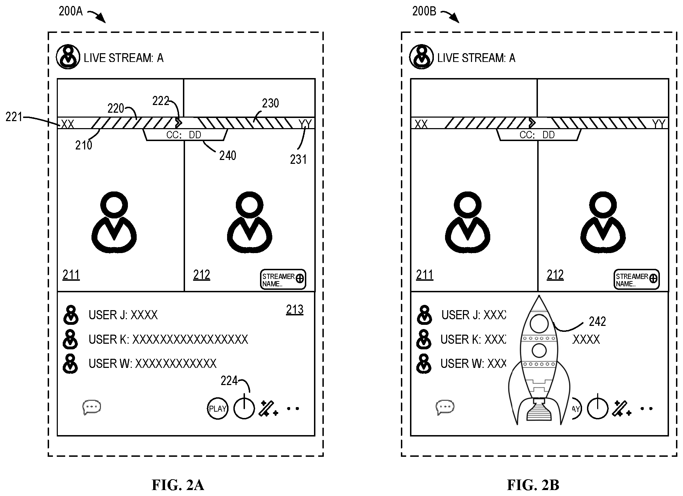

For convenience, reference may be made to FIG. 2A, which illustrates an example interface 200A of some embodiments of the present disclosure. After the first live stream and the second live stream participate in a live streaming interaction event (for example, an event of live streaming PK), the interface 200A may be provided to the user 140.

In the interface 200A, an area 211 may present the live streaming content in the first live stream, and an area 212 may present the live streaming content in the second live stream. Therefore, the terminal device 110 may provide live content in a plurality of live streams (for example, the first live stream and the second live stream) for the user 140 at the same time.

Further, the terminal device 110 may provide an interaction area 213 in a live streaming interface (for example, the interface 200A). The user 140 may use the interaction area 213 to interact with the live stream. For example, text communication may be performed with a further user in the live stream. Generally, the interaction area 213 corresponds to a live stream selected and entered by the user 140. For example, in a case where the user 140 selects the first live stream, the text content presented in the interaction area 213 is sent by a further user entering the first live stream. The terminal device 110 may further provide a set of controls 224 in the interaction area 213, and the user 140 may complete operations such as sending an expression, giving a prop, and the like through respective controls in the set of controls 224.

As shown in FIG. 2A, the terminal device 110 may further display, for at least a live streaming interaction event associated with the first live stream and the second live stream, an interaction component associated with the live streaming interaction event in the live streaming interface. For example, the terminal device 110 may display the interaction component 210 in the interface 200A.

The live streaming interaction event may be an interaction event associated with a plurality of live streams. For ease of description, examples are described herein with reference to scenarios in which the first live stream and the second live stream are associated. It should be understood that this is merely an example description, and is not intended to limit this. The live streaming interaction event may involve more live streams, for example, event of live stream teaming PK, event of a plurality of live stream PK, and the like.

In some embodiments, the live streaming interaction event may be a competition interaction event, indicating that different live streams correspond to different interaction targets. For example, the competition interaction event may include competition interaction (in some scenarios, also referred to as PK) of the first live stream and the second live stream based on a certain standard and within a time period, and determination of a winning live stream, after the competition interaction is completed, based on the interaction information (for example, an interaction value) of each live stream, and rewarding.

In some embodiments, the live streaming interaction event may also be a collaborative interaction event, indicating that different live streams correspond to the same interaction target. For example, the collaborative interaction event may include interaction between the first live stream and the second live stream to jointly complete one target (for example, a point value of the first live stream and the second live stream and a target-satisfied point value).

For the first live stream, the corresponding interaction value may be referred to as a first interaction value, which may be determined based on an interaction operation in the first live stream. Similarly, for the second live stream, the corresponding interaction value may be referred to as a second interaction value, which may be determined based on an interaction operation in the second live stream. For example, taking obtaining points of a competition as an example, the first interaction value may be, for example, a total point value accumulated by a set of users in the first live stream. The second interaction value may be, for example, a total point value accumulated by a further set of users in the second live stream.

The interaction component 210 may feedback an interaction situation of respective live streams with respect to the live streaming interaction event. In some embodiments, taking the interaction event participating in the first live stream and the second live stream as an example, the interaction component 210 may include a control for indicating an interaction degree of a single or a plurality of live streams, and the interaction degree may be correspondingly accumulated based on an interaction operation occurring in the live stream within a predetermined time period. Taking a progress bar as an example of a progress control, the length value of the progress bar may indicate, for example, an interaction degree or an interaction value of the live stream. Such control is also referred to as a progress control.

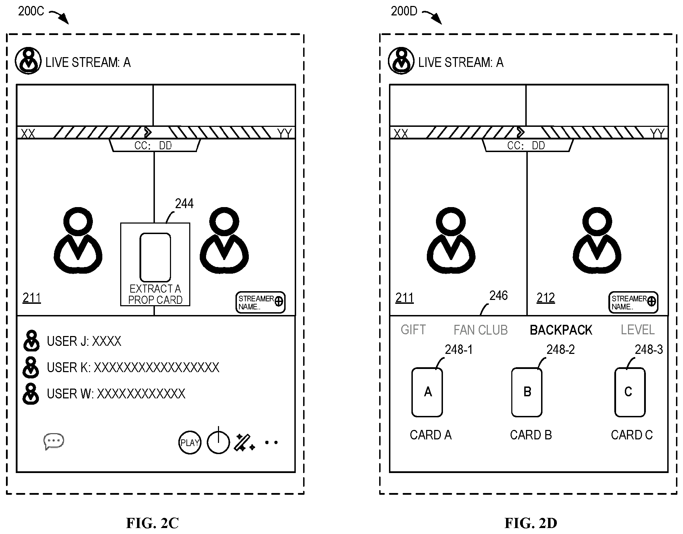

As shown in FIG. 2, the interaction component 210 may include, for example, a progress control 220 and a progress control 230 (which may also be collectively referred to as a progress control). The terminal device 110 may use the progress control 220 and the progress control 230 to feedback an interaction situation of the live stream. For example, in the competition interaction event, if a comparison is between point values obtained with respect to the first live stream and the second live stream after a predetermined duration, the interaction component 210 may indicate the obtained point value of the first live stream through the progress control 220, and indicate the obtained point value of the first live stream through the progress control 230. In some embodiments, the interaction component 210 may determine the display areas corresponding to the progress control 220 and the progress control 230 (for example, a full display length of the interaction component 210 based on a ratio relationship) by comparing the obtained ratio relationships between the point values, so as to indicate the interaction between the first live stream and the second live stream.

For example, refer to FIG. 2A. In the interface 200A, indication information 221 for indicating the obtained point value of the first live stream may also be presented, that is, the indication information 221 may indicate the interaction information of the first live stream, that is, the first interaction value. The interface 200A may further present indication information 231 for indicating the interaction information of the second live stream, that is, the second interaction value.

In the interface 200A, an indication element 222 may also be utilized to distinguish the boundaries of the progress control 220 and the progress control 230. In some embodiments, if the live streaming interaction event is constrained by time (for example, within a duration of CC: DD, comparing total point values obtained by the live streams), for example, the interface 200A may also present indication information 240 for indicating the remaining time.

In some embodiments, the terminal device 110 may further display, in the interaction component, contribution degree information corresponding to a predetermined interaction operation. The contribution degree information indicates a contribution degree of the predetermined interaction operation to the live streaming interaction event. For example, in a case where the predetermined interaction operation is to provide a point value, the contribution degree information may indicate an increase in the point value that may be brought by the predetermined interaction operation.

It should be understood that an example of a live streaming interaction event is described above with reference to two live streams, and the live streaming interaction event in the present disclosure may be applicable to a scenario of more live streams.

### Obtaining of Interactive Resource

As discussed with reference to FIG. 2A, the user may participate in the live streaming interaction event described above, for example, by presenting a gift to increase the interactive value of the corresponding live stream.

In some embodiments, in order to improve the participation degree of the user with respect to the live streaming interaction event, the terminal device 110 may further provide an interactive resource for the live streaming interaction event to the user based on the specific interaction operation performed by the user.

In some embodiments, the terminal device 110 may provide, during the current live streaming interaction event, an interactive resource based on at least one historical interaction operation of the user 140. Specifically, when a specific interaction operation of the user during the current interaction event satisfies a first predetermined condition, the terminal device 110 may provide the at least one interactive resource to the user.

As shown in FIG. 2B, when the user performs, during the current interaction event, an interaction operation such as giving a specific virtual gift 242, the terminal device 110 may present an interface 200C as shown in FIG. 2C.

As shown in FIG. 2C, the terminal device 110 may present, in the interface 200C, an interface element 244 corresponding to providing an interactive resource (for example, a prop card). For example, the interactive resource provided for the user may be randomly selected from a set of predetermined interactive resources.

In some embodiments, such a first predetermined condition may be appropriately set according to a scenario requirement, examples of which may include, but are not limited to: performing a specific type of interaction operation, a contribution degree of the executed interaction operation to a current live streaming interaction event being greater than a threshold, and so on.

Therefore, the user may obtain the interactive resource by performing a specific interaction operation during the live streaming interaction event, thereby further enriching the participation degree of the user on the live streaming interaction event.

Further, as shown in FIG. 2D, the terminal device 110 may present a resource panel 256 to display at least one interactive resource obtained by the current user, for example, an interactive resource 248-1, an interactive resource 248-2, and an interactive resource 248-3 (individually or collectively referred to as an interactive resource 248).

In some embodiments, the terminal device 110 may further provide the interactive resource 248 to the user based on at least one historical interaction operation of the user during the historical interaction event associated with the first live stream.

For example, for the live stream A, the terminal device 110 may further provide the interactive resource 248 to the user based on an interaction operation situation in a historical interaction event (for example, a historical PK event) of the user live stream A.

For example, if a set of historical interaction operations of the user during the historical interaction event meet the second predetermined condition, the terminal device 110 may provide the at least one interactive resource to the user.

For example, the second predetermined condition may include: a contribution degree of the user in the historical interaction event is greater than a threshold. As an example, at least one interactive resource may be provided to a user with the highest contribution in each historical interaction event.

It should be understood that such second predetermined condition may be appropriately set according to actual needs, and the present disclosure is not intended to be limited thereto.

Therefore, the user may also obtain the interactive resource for the subsequent interaction event by participating in the interaction event of the live stream, thereby improving the participation degree of the user on the live streaming interaction event.

In some embodiments, the interactive resources obtained in different manners may, for example, have different usage ranges. For example, the interactive resource obtained by performing a specific interaction operation in the current live stream may be used, for example, only for the current live streaming interaction event. As a further example, the live streaming interactive resource obtained by participating in the historical live streaming interaction event may, for example, be used only for a subsequent live streaming interaction event of the current live stream.

In some embodiments, taking FIG. 2D as an example, the display style of the interactive resource available for the current live streaming interaction event, for example, may be different from the unavailable interactive resource. In addition, in a resource panel 246, the terminal device 110 may also present description information of each interactive resource, for example, a name, a usage rule, a usage effect, and availability of each interactive resource.

### Use of Interactive Resource

In some embodiments, after receiving a selection of the interactive resource 248, the terminal device 110 may apply the target policy corresponding to the interactive resource 248 to the current live streaming interaction event.

In some embodiments, different types of interactive resources 248 may correspond to different policies. Some interactive resources 248 may, for example, be associated with interaction information of at least one among a plurality of live streams during a target interaction event.

In some embodiments, the target policy corresponding to a specific type of interactive resource 248 may be used, for example, to control update of the interaction information of the current live stream. Using FIG. 2D as an example, for example, the interactive resource 248-1 may be used to control an update process of an interaction value in the live stream A.

Taking a prop card as an example of the interactive resource 248, such specific interactive resource 248-1 may be referred to as a "critical-hit card" for example. In a case where the user uses the "critical-hit card", the update process of the interaction information of the current live stream may change accordingly. For example, within a predetermined period, the contribution degree of the interaction operation associated with the live stream to the interaction information of the live stream may be correspondingly increased.

By way of example only, in a case where a "critical-hit card" is not used, the contribution of a specific interaction operation to the interaction information may be, for example, 100 points. In a case where the "critical-hit card" is in effect, the contribution degree of the specific interaction operation to the interaction information may be increased, for example, by a predetermined multiplier, for example, randomly increased by 3 to 5 times.

In some embodiments, the target policy corresponding to the specific type of interactive resource 248 may be, for example, used to control an update of second interaction information of at least one second live stream among the plurality of live streams, where the at least one second live stream is different from the current live stream.

Still referring to FIG. 2D as an example, in a case where the live stream A and the live stream B participate in the interaction event, the interactive resource 248-3 may, for example, be used to control update of the interaction information of the live stream B.

For example, in a case where the user uses the interactive resource 248-3, the update process of the interaction information of the live stream B may change accordingly. For example, within a predetermined period, the contribution degree of the interaction operation associated with the live stream to the interaction information of the live stream may be correspondingly reduced.

For example only, in a case where the interactive resource 248-3 is not used, the contribution degree of the specific interaction operation to the interaction information of the live stream B may be, for example, 100 points. In a case where the interactive resource 248-3 is effective, the contribution degree of the specific interaction operation to the interaction information may be reduced, for example, by 3 to 5 times randomly.

In some embodiments, the policy corresponding to the interactive resource 248 may also control, for example, update of the interaction information of the plurality of live streams at the same time. For example, still referring to FIG. 2D as an example, in a case where the live stream A and the live stream B participate in the interaction event, the interactive resource 248 may be used, for example, to control the update of the interaction information of the live stream A and the live stream B at the same time.

Taking a prop card as an example of the interactive resource 248, such specific interactive resource may include, for example, a "leverage transfer card". In a case where the user uses the "leverage transfer card", the update process of the interaction information of the current live stream and the update process of the interaction information of a further live stream may change accordingly. For example, taking FIG. 2D as an example, during the effect of "leverage transfer card", the predetermined proportion of the interaction information newly added to the live stream B will be transferred to the live stream A.

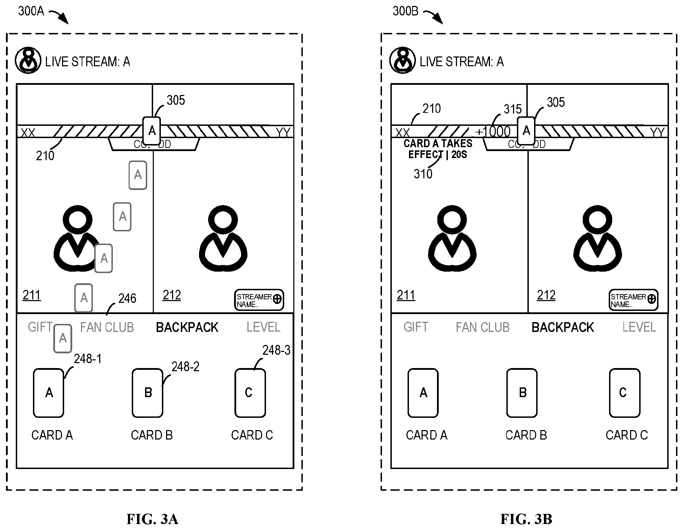

The application process of the interactive resource will be described below with reference to FIGS. 3A to 3B. For example, as shown in FIG. 3A, in a case where the user selects the interactive resource 248-1, the terminal device 110 may present, at the interaction component 210 corresponding to the first live stream in the live streaming interface 300A, a first visual element 305 corresponding to the interactive resource 248-1. As discussed above, the interaction component 210 may be used to present first interaction information (e.g., an interaction value) of the first live stream.

In some embodiments, as shown in FIG. 3A, in order to facilitate the user to perceive the effect of the interactive resource 248, the terminal device 110 may further present a dynamic effect corresponding to the target resource, to indicate the movement of the first visual element 305 from the resource panel 246 to the interaction component 210.

Therefore, the user may intuitively perceive the action process of the interactive resource on the interaction event, thereby improving the experience of the user participating in the live streaming interaction event.

In some embodiments, as shown in FIG. 3B, the terminal device 110 may further present, at the interaction component 210, a second visual element 315 having the target display style. The second visual element 315 is used to indicate an update of the first interaction information of the current live stream. Such a target display style may be determined, for example, based on the interactive resource 248-1.

Taking the "critical-hit card" as an example of the interactive resource 248-1, in a case where an interaction operation contributing to the interaction information of the live stream occurs in the current live stream, the terminal device 110 may display the second visual element 315 to indicate an increase of the interaction information, for example, "+1000".

Further, the display style of such second visual element 315 may also be determined based on a "critical-hit card". For example, as discussed above, a "critical-hit card" may gain a contribution to a factor of 3 to 5 times. Correspondingly, the size of the font of the second visual element 315 may be set according to a multiplier of the contribution degree, for example, a larger multiplier may correspond to a larger display font, so as to allow the user to intuitively perceive the effect of the interactive resource corresponding to the live streaming interaction event.

In some embodiments, the interactive resource 248 may also have a corresponding effective time length, for example. Therefore, the terminal device 110 may apply the target policy to the target interaction event in a time period corresponding to the interactive resource 248.

Further, as shown in FIG. 3B, the terminal device 110 may further present prompt information 310 associated with the effective time period, to indicate, for example, a remaining duration or an elapsed duration of the time period.

In some embodiments, the target policy corresponding to the interactive resource 248 may further be used to control a visibility of the first interaction information of the current first live stream for at least one live stream among the plurality of live streams, where the at least one third live stream is different from the first live stream.

As discussed above, in general, a user of the first live stream (for example, a live stream A) can view interaction information of a further live stream (for example, a live stream B) through a live streaming interface.

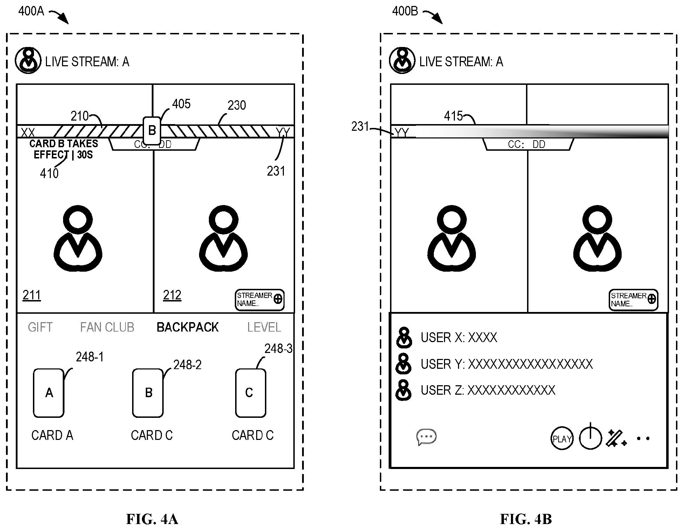

As shown in FIG. 4A, in a case where the user selects the interactive resource 248-2, the terminal device 110 may present a corresponding visual element 405 on the interaction component 210. As a result, for users of the live stream A, for instance, they may view the interaction information of a further live stream (such as the live stream B) through a live streaming interface 400A of the live stream A. For example, the terminal device 110 may display the indication information 231 in the interface 400A to indicate the interaction value of the live stream B.

Correspondingly, the terminal device 110 may further present prompt information 410 to indicate that the interactive resource 248-2 is in an effective state and the corresponding effective time period.

In contrast, as shown in FIG. 4B, for the live streaming interface 400B of the live stream B, in a case where the interactive resource 248-2 is effective, the live streaming interface 400B will no longer present the interaction information of the live stream A. For example, the interaction component 415 in the live streaming interface 400B may present a specific display style to hide the interaction information about the live stream A (e.g., suspend presenting corresponding indication information and progress).

In some embodiments, the plurality of interactive resources may, for example, take effect at the same time without repelling. For example, the interactive resource 248-1 and the interactive resource 248-2 may act on the live stream at the same time.

In some embodiments, in a case where a plurality of users apply the same interactive resource, they may enter the effective state in turn according to the order. For example, taking the effective duration of the interactive resource 248-1 as 20 seconds as an example, in a case where a plurality of users give, for example, three interactive resources 248-1, the three interactive resources 248-1 may take an effective state in turn to reach an effective duration of 60 seconds.

In some embodiments, in a case where different types of interactive resources have the same effect or the opposite effect, their effects, for example, may be superimposed. For example, if the specific interactive resource can increase the proportion of the contribution degree of the current live stream (for example, the "critical-hit card" is used), and the interactive resource used by a further live stream can reduce the proportion of the contribution degree of the current live stream, the final contribution degree may be determined according to a comprehensive effect of the two interactive resources.

In some embodiments, in addition to the interaction information, the interactive resource 248 may be associated with an interactive resource that can, for example, be used for at least one live stream among the plurality of live streams. For example, the use of a specific interactive resource 248 may be used to reduce an interactive resource that may be used by a user of a further live stream, or may increase an interactive resource that may be used by a user of the current live stream.

In some embodiments, the target policy corresponding to the interactive resource 248 may, for example, also be associated with a current policy and/or a future policy for at least one live stream among the plurality of live streams. For example, the effect of some interactive resources 248 may enable the current live stream to not be acted on by interactive resource in a further live stream within a predetermined time period, or immediately cancel the effect of the interactive resource of the further live stream on the current live stream.

Based on this manner, the embodiments of the disclosure can support the user not only interact through the interaction operation in the live streaming interaction event, but also influence the live streaming interaction event by using the interactive resource, so that the participation degree of the user on the live streaming interaction event can be greatly improved.

In some embodiments, the process of using the interactive resource discussed above may, for example, be applicable only to the non-streamer user of the live stream, so that the non-streamer user can participate in the interaction event of the live stream more deeply.

In addition, it should be understood that although the above examples only describe the interaction events in which two live streams participate, obtaining and use of the interactive resources are also applicable to interaction events of a plurality of live streams. For example, in a case where the team PK is performed in 4 live streams, if the current live stream uses the interactive resource 248-2, the live stream in the same team as the live stream may, for example, continue to view the interaction information of the live stream, and the two live streams of different teams may, for example, not be able to view the interaction information of the live stream. For the application of other types of interactive resources in the live streaming interaction event in which more live streams participate, reference may be made to the process of the two live stream interaction events, as discussed above, and details are not described herein again.

In some embodiments, for a further user other than the target user in the live stream, the live streaming interface of the first live stream may be obtained. In a case where the target resource is selected and applied by the target user, at least one visual element corresponding to the target resource may be correspondingly displayed in the live streaming interface of the further user.

For example, in a case that the target resource is applied, referring to the content described in FIG. 3A, FIG. 3B, FIG. 4A, and FIG. 4B, the live streaming interface of the further user may similarly change the display style of the interaction component of the live stream.

For example, the live streaming interface of the further user also presents the first visual element corresponding to the target interactive resource, for example, the first visual element 305 in FIG. 3A.

As a further example, the live streaming interface of the further user may also present, at the interaction component, the second visual element with a target display style, for example, the second visual element 315 shown in FIG. 3B.

Therefore, the embodiments of the disclosure can enable a further user to know the application condition of the interactive resource in the live stream.

### Example Process

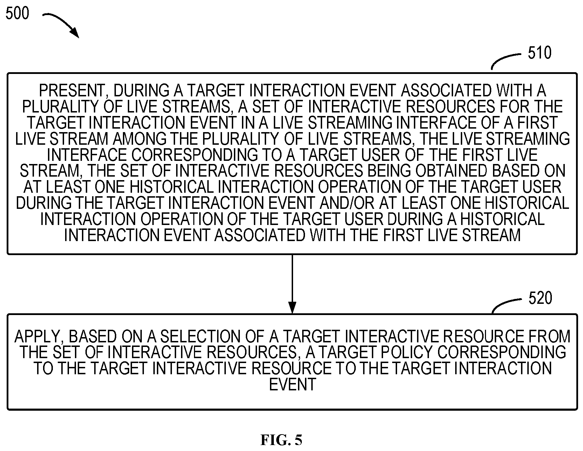

FIG. 5 illustrates a flowchart of an example live streaming interaction process 500 according to some embodiments of the present disclosure. The process 500 may be implemented at the terminal device 110 associated with a user of a live stream (e.g., a streamer, a user or viewer participating in a live streaming event). The process 500 is described below with reference to FIG. 1.

As shown in FIG. 5, at block 510, the terminal device 110 presents, during a target interaction event associated with a plurality of live streams, a set of interactive resources for the target interaction event in a live streaming interface of a first live stream among the plurality of live streams, the live streaming interface corresponding to a target user of the first live stream, the set of interactive resources being obtained based on at least one historical interaction operation of the target user during the target interaction event and/or at least one historical interaction operation of the target user during a historical interaction event associated with the first live stream.

At block 520, the terminal device 110 applies, based on a selection of a target interactive resource from the set of interactive resources, a target policy corresponding to the target interactive resource to the target interaction event.

In some embodiments, the target policy is associated with interaction information of at least one live stream among the plurality of live streams during the target interaction event.

In some embodiments, the target policy is configured to control at least one of: an update of first interaction information of the first live stream; an update of second interaction information of at least one second live stream among the plurality of live streams, the at least one second live stream being different from the first live stream; or a visibility of the first interaction information of the first live stream to at least one third live stream among the plurality of live streams, the at least one third live stream being different from the first live stream.

In some embodiments, the target policy is associated with an interactive resource for at least one live stream among the plurality of live streams; or the target policy is associated with a current policy and/or a future policy for at least one live stream among the plurality of live streams.

In some embodiments, the process 500 further includes: providing at least one interactive resource among the set of interactive resources to the target user, in response to a target interaction operation of the target user during the target interaction event satisfying a first predetermined condition.

In some embodiments, the process 500 further includes: providing at least one interactive resource among the set of interactive resources to the target user, in response to a set of historical interaction operations of the target user during the historical interaction event satisfying a second predetermined condition.

In some embodiments, the process 500 further includes: presenting, in the live streaming interface, a first visual element corresponding to the target interactive resource at an interaction component corresponding to the first live stream, the interaction component presenting first interaction information of the first live stream.

In some embodiments, the set of interactive resources is presented in a resource panel in the live streaming interface, and the process 500 further includes: presenting a dynamic effect corresponding to the target resource, the dynamic effect indicating a motion of the first visual element from the resource panel to the interaction component.

In some embodiments, the process 500 further includes: presenting, at the interaction component, a second visual element in a target display style, the second visual element indicating an update of the first interaction information, wherein the target display style is determined based on the target interactive resource.

In some embodiments, applying the target policy corresponding to the target interactive resource to the target interaction event includes: applying the target policy to the target interaction event in a time period corresponding to the target interactive resource.

In some embodiments, the process 500 further includes: presenting, in the live streaming interface, prompt information associated with the time period.

In some embodiments, the target user is a non-streamer user of the first live stream.

### Example Apparatus and Device

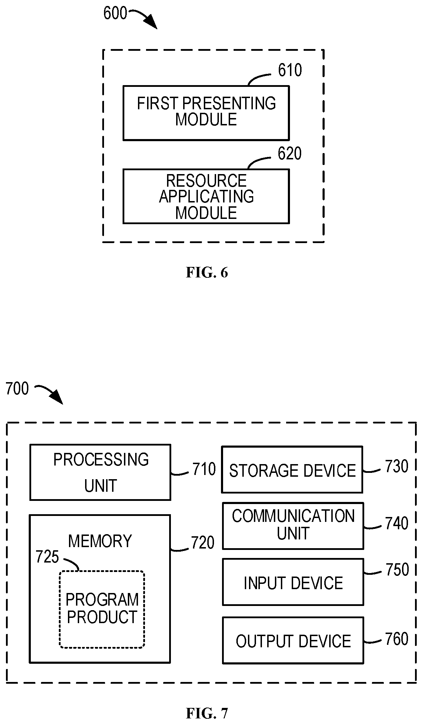

The embodiments of the present disclosure also provide a corresponding apparatus for implementing the above method or process. FIG. 6 is a schematic structural block diagram of an apparatus 600 for live streaming interaction according to some embodiments of the present disclosure. The apparatus 600 may be implemented or included in the terminal device 110. The various modules/components in the apparatus 600 may be implemented by hardware, software, firmware, or any combination thereof.

As shown in FIG. 6, the apparatus 600 includes: a first presenting module 610 configured to present, during a target interaction event associated with a plurality of live streams, a set of interactive resources for the target interaction event in a live streaming interface of a first live stream among the plurality of live streams, the live streaming interface corresponding to a target user of the first live stream, the set of interactive resources being obtained based on at least one historical interaction operation of the target user during the target interaction event and/or at least one historical interaction operation of the target user during a historical interaction event associated with the first live stream; and a resource applicating module 620 configured to apply, based on a selection of a target interactive resource from the set of interactive resources, a target policy corresponding to the target interactive resource to the target interaction event.

In some embodiments, the target policy is associated with interaction information of at least one live stream among the plurality of live streams during the target interaction event.

In some embodiments, the target policy is configured to control at least one of: an update of first interaction information of the first live stream; an update of second interaction information of at least one second live stream among the plurality of live streams, the at least one second live stream being different from the first live stream; or a visibility of the first interaction information of the first live stream to at least one third live stream among the plurality of live streams, the at least one third live stream being different from the first live stream.

In some embodiments, the target policy is associated with an interactive resource for at least one live stream among the plurality of live streams; or the target policy is associated with a current policy and/or a future policy for at least one live stream among the plurality of live streams.

In some embodiments, the apparatus 600 further includes a first providing module configured to provide at least one interactive resource among the set of interactive resources to the target user, in response to a target interaction operation of the target user during the target interaction event satisfying a first predetermined condition.

In some embodiments, the apparatus 600 further includes a second providing module configured to provide at least one interactive resource among the set of interactive resources to the target user, in response to a set of historical interaction operations of the target user during the historical interaction event satisfying a second predetermined condition.

In some embodiments, the apparatus 600 further includes a display module configured to: present, in the live streaming interface, a first visual element corresponding to the target interactive resource at an interaction component corresponding to the first live stream, the interaction component presenting first interaction information of the first live stream.

In some embodiments, the set of interactive resources is presented in a resource panel in the live streaming interface, and the display module is further configured to: present a dynamic effect corresponding to the target resource, the dynamic effect indicating a motion of the first visual element from the resource panel to the interaction component.

In some embodiments, the display module is further configured to: present, at the interaction component, a second visual element in a target display style, the second visual element indicating an update of the first interaction information, wherein the target display style is determined based on the target interactive resource.

In some embodiments, the resource applicating module 620 is further configured to apply the target policy to the target interaction event in a time period corresponding to the target interactive resource.

In some embodiments, the apparatus 600 further includes a prompt module configured to present, in the live streaming interface, prompt information associated with the time period.

In some embodiments, the target user is a non-streamer user of the first live stream.

The embodiments of the present disclosure further provides an apparatus for live streaming interaction, including: a second presenting module configured to present, during a target interaction event associated with a plurality of live streams, a live streaming interface of a first live stream among the plurality of live streams; and a third presenting module configured to present, in the live streaming interface, at least one visual element corresponding to a target interactive resource based on a selection of the target interactive resource by a target user in the first live stream, wherein the target interactive resource is obtained based on at least one historical interaction operation of a target user during the target interaction event and/or at least one historical interaction operation of a target user during a historical interaction event associated with the first live stream.

In some embodiments, the third presenting module is further configured to: present, in the live streaming interface, a first visual element corresponding to the target interactive resource at an interaction component corresponding to the first live stream, the interaction component being for presenting first interaction information of the first live stream.

In some embodiments, the third presenting module is further configured to: present, at the interaction component, a second visual element in a target display style, the second visual element indicating an update of the first interaction information, wherein the target display style is determined based on the target interactive resource.

FIG. 7 illustrates a block diagram of an electronic device 700 in which one or more embodiments of the present disclosure may be implemented. It should be understood that the electronic device 700 illustrated in FIG. 7 is merely example and should not constitute any limitation on the functionality and scope of the embodiments described herein. The electronic device 700 shown in FIG. 7 may be configured to implement the electronic device 110 in FIG. 1.

As shown in FIG. 7, the electronic device 700 is in the form of a general-purpose electronic device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and capable of performing various processes according to programs stored in the memory 720. In multiprocessor systems, multiple processing units execute computer-executable instructions in parallel to improve parallel processing capabilities of the electronic device 700.

The electronic device 700 typically includes a plurality of computer storage media. Such media may be any available media accessible to the electronic device 700, including, but not limited to, volatile and non-volatile media, removable and non-removable media. The memory 720 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 730 may be a removable or non-removable medium and may include a machine-readable medium, such as a flash drive, magnetic disk, or any other medium, which may be capable of storing information and/or data and may be accessed within the electronic device 700.

The electronic device 700 may further include additional removable/non-removable, volatile/non-volatile storage media. Although not shown in FIG. 7, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communication unit 740 is configured to communicate with a further electronic device through a communication medium. In addition, the functionality of components of the electronic device 700 may be implemented in a single computing cluster or multiple computing machines capable of communicating over a communication connection. Thus, the electronic device 700 may operate in a networked environment using logical connections with one or more other servers, network personal computers (PCs), or a further network node.

The input device 750 may be one or more input devices such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as needed, external devices such as storage devices, display devices, etc. , communicate with one or more devices that enable a user to interact with the electronic device 700, or communicate with any device (e.g., a network card, a modem, etc. ) that enables the electronic device 700 to communicate with one or more other electronic devices. Such communication may be performed via an input/output (I/O) interface (not shown).

According to example implementations of the present disclosure, a computer-readable storage medium having computer-executable instructions stored thereon is provided, where the computer program is executable by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a specific manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are example, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of live streaming interaction, comprising:
presenting, during a target interaction event associated with a plurality of live streams, a set of interactive resources for the target interaction event in a live streaming interface of a first live stream among the plurality of live streams, the live streaming interface corresponding to a target user of the first live stream, the set of interactive resources being obtained based on at least one historical interaction operation of the target user during the target interaction event and/or at least one historical interaction operation of the target user during a historical interaction event associated with the first live stream; and
applying, based on a selection of a target interactive resource from the set of interactive resources, a target policy corresponding to the target interactive resource to the target interaction event.

2. The method of claim 1, wherein the target policy is associated with interaction information of at least one live stream among the plurality of live streams during the target interaction event.

3. The method of claim 2, wherein the target policy is configured to control at least one of:
an update of first interaction information of the first live stream;
an update of second interaction information of at least one second live stream among the plurality of live streams, the at least one second live stream being different from the first live stream; or
a visibility of the first interaction information of the first live stream to at least one third live stream among the plurality of live streams, the at least one third live stream being different from the first live stream.

4. The method of claim 1, wherein the target policy is associated with an interactive resource for at least one live stream among the plurality of live streams; or
the target policy is associated with a current policy and/or a future policy for at least one live stream among the plurality of live streams.

5. The method of claim 1, further comprising:
providing at least one interactive resource among the set of interactive resources to the target user, in response to a target interaction operation of the target user during the target interaction event satisfying a first predetermined condition.

6. The method of claim 1, further comprising:
providing at least one interactive resource among the set of interactive resources to the target user, in response to a set of historical interaction operations of the target user during the historical interaction event satisfying a second predetermined condition.

7. The method of claim 1, further comprising:
presenting, in the live streaming interface, a first visual element corresponding to the target interactive resource at an interaction component corresponding to the first live stream, the interaction component presenting first interaction information of the first live stream.

8. The method of claim 7, wherein the set of interactive resources is presented in a resource panel in the live streaming interface, the method further comprising:
presenting a dynamic effect corresponding to the target resource, the dynamic effect indicating a motion of the first visual element from the resource panel to the interaction component.

9. The method of claim 7, further comprising:
presenting, at the interaction component, a second visual element in a target display style, the second visual element indicating an update of the first interaction information, wherein the target display style is determined based on the target interactive resource.

10. The method of claim 1, wherein applying the target policy corresponding to the target interactive resource to the target interaction event comprises:
applying the target policy to the target interaction event in a time period corresponding to the target interactive resource.

11. The method of claim 10, further comprising:
presenting, in the live streaming interface, prompt information associated with the time period.

12. The method of claim 1, wherein the target user is a non-streamer user of the first live stream.

13. A method of live streaming interaction, comprising:
presenting, during a target interaction event associated with a plurality of live streams, a live streaming interface of a first live stream among the plurality of live streams; and
presenting, in the live streaming interface, at least one visual element corresponding to a target interactive resource based on a selection of the target interactive resource by a target user in the first live stream, wherein the target interactive resource is obtained based on at least one historical interaction operation of a target user during the target interaction event and/or at least one historical interaction operation of a target user during a historical interaction event associated with the first live stream.

14. The method of claim 13, wherein presenting, in the live streaming interface, at least one visual element corresponding to the target interactive resource comprises:
presenting, in the live streaming interface, a first visual element corresponding to the target interactive resource at an interaction component corresponding to the first live stream, the interaction component being for presenting first interaction information of the first live stream.

15. The method of claim 14, further comprising:
presenting, at the interaction component, a second visual element in a target display style, the second visual element indicating an update of the first interaction information, wherein the target display style is determined based on the target interactive resource.

16. An apparatus for live streaming interaction, comprising:
a first presenting module configured to present, during a target interaction event associated with a plurality of live streams, a set of interactive resources for the target interaction event in a live streaming interface of a first live stream among the plurality of live streams, the live streaming interface corresponding to a target user of the first live stream, the set of interactive resources being obtained based on at least one historical interaction operation of the target user during the target interaction event and/or at least one historical interaction operation of the target user during a historical interaction event associated with the first live stream; and
a resource applicating module configured to apply, based on a selection of a target interactive resource from the set of interactive resources, a target policy corresponding to the target interactive resource to the target interaction event.

17. An apparatus for live streaming interaction, comprising:
a second presenting module configured to present, during a target interaction event associated with a plurality of live streams, a live streaming interface of a first live stream among the plurality of live streams; and
a third presenting module configured to present, in the live streaming interface, at least one visual element corresponding to a target interactive resource based on a selection of the target interactive resource by a target user in the first live stream, wherein the target interactive resource is obtained based on at least one historical interaction operation of a target user during the target interaction event and/or at least one historical interaction operation of a target user during a historical interaction event associated with the first live stream.

18. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 12 or any of claims 13 to 15.

19. A computer-readable storage medium having a computer program stored thereon, the computer program being executable by a processor to implement the method of any of claims 1 to 12 or any of claims 13 to 15.
